# EUROPEAN PATENT APPLICATION

(11) **EP 3 834 895 A1**
(43) Date of publication of application: **16.06.2021**
(21) Application number: 20213254.4
(22) Date of filing: 10.12.2020
(51) Int. Cl.: A63C 11/02, B60R 9/06, B60R 9/12

(54) **SKIS AND SNOWBOARDS RACK**

(30) Priority: 13.12.2019 TW 108216555 U
(71) Applicant: King Rack Industrial Co., Ltd., Taichung City (TW)
(72) Inventor: Wang, Chiu-Kuei, Taichung City (TW); Girod, Frederic, Taichung City (TW)
(74) Representative: Cabinet Chaillot

(57) **Abstract**

A skis and snowboards rack includes a post which is connected to rear end of a vehicle. A first clamp unit and a second clamp unit are respectively connected to the post. The first clamp unit includes multiple pairs of first bars. A first space is formed between each pair of the first bars. Multiple restriction members are slidably mounted to each pair of the first bars. The second clamp unit includes multiple pairs of second bars. A second space is formed between each pair of the second bars. An end bar is connected to each of the first clamp unit and the second clamp unit to close up the first spaces and the second spaces. Skis and snowboards are restricted in the first and second spaces. The end bars prevent the skis and snowboards from dropping from the first and second spaces.

## Description

### BACKGROUND OF THE INVENTION

### 1. Fields of the invention

The present invention relates to a skis and snowboards rack, and more particularly, to a rack connected to rear end of a vehicle for conveniently carrying skis and snowboards.

### 2. Descriptions of Related Art

The conventional skis and snowboards racks for vehicles are installed to the top of the vehicles and the skis and snowboards are secured on the top of the vehicles. However, the skis and snowboards increase the height of the vehicles and may hit the garage door or parking facility to damage the skiing equipment and the facility.

The present invention intends to provide a rack for carrying skis and snowboards, and the rack is connected to rear end of a vehicle so as to eliminate shortcomings mentioned above.

### SUMMARY OF THE INVENTION

The present invention relates to a skis and snowboards rack, and comprises a post connected to a vehicle, and including a first clamp unit and a second clamp unit respectively connected thereto. The first clamp unit includes multiple pairs of first bars, and a first space is formed between each pair of the first bars. Multiple restriction members are slidably mounted to each pair of the first bars. The second clamp unit includes multiple pairs of second bars, and a second space is formed between each pair of the second bars. The second spaces are located corresponding to the first spaces. An end bar is connected to each of the first clamp unit and the second clamp unit to close up the first spaces and the second spaces.

Preferably, the post includes a first positioning section and a second positioning section. Each of the first and second positioning section includes multiple holes. Multiple first and second positioning members extend through a portion of each of the first and second clamp units and the holes to connect the first and second clamp units to the post.

Preferably, one of the two first bars of one pair of the first clamp unit includes a first pivotal end. One of the two first bars of another one pair of the first clamp unit includes a first connection end. One of the two second bars of one pair of the second clamp unit includes a second pivotal end, and one of the two second bars of another one pair of the second clamp unit includes a second connection end. The end bars each have a pivotal portion and an engaging portion, wherein the pivotal portion is pivotably connected to the first/second pivotal end, and the engaging portion is detachably mounted to the first/second connection end.

Preferably, the first clamp unit includes two first positioning plates, and the second clamp unit includes two second positioning plates. The post is connected between the two first positioning plates and the two second positioning plates. The first and second positioning plates of the first and second clamp units are pivotable relative to the post.

Preferably, the first clamp unit includes a first tube and two first positioning plates which are connected to the first tube. Each first positioning plate includes first bores defined through at least three corners thereof. The multiple pairs of first bars are connected to the first tube. The first positioning plates are pivotably connected to the first positioning section of the post by multiple first positioning members. The first positioning plates are pivotable about one of the first positioning members at one of corners thereof.

Preferably, the second clamp unit includes a second tube and two second positioning plates which are connected to the second tube. Each second positioning plate includes second bores defined through at least three corners thereof. The multiple pairs of second bars are connected to the second tube. The second positioning plates are pivotably connected to the second positioning section of the post by multiple second positioning members. The second positioning plates are pivotable about one of the second positioning member at one of corners thereof.

The primary object of the present invention is to provide a skis and snowboards rack that is connected to the rear end of a vehicle so as not to increase the height of the vehicle and not to block the driver's sight.

Another object of the present invention is that the skis and snowboards are positioned in the first and second spaces between the first and second bars. The restriction members further position the skis and snowboards.

Yet another object of the present invention is that the skis and snowboards rack can also be used to secure surfing boards.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the skis and snowboards rack of the present invention;
Fig. 2 is an exploded view of the skis and snowboards rack of the present invention;
Fig. 3 shows that the end bars are pivoted relative to the first and second clamp units of the skis and snowboards rack of the present invention;
Fig. 4 shows that a snowboard is to be positioned to skis and snowboards rack of the present invention;
Fig. 5 shows that a snowboard is positioned to skis and snowboards rack of the present invention;
Figs. 6 and 7 show that the first and second clamp units are adjusted along the post;
Fig. 8 shows that the first and second clamp units are pivoted relative to the post, and
Fig. 9 shows that the first and second clamp units are folded to be parallel to the post.

### DETAILED DESCRIPTION OF THE PREFERRED EMBODIMENT

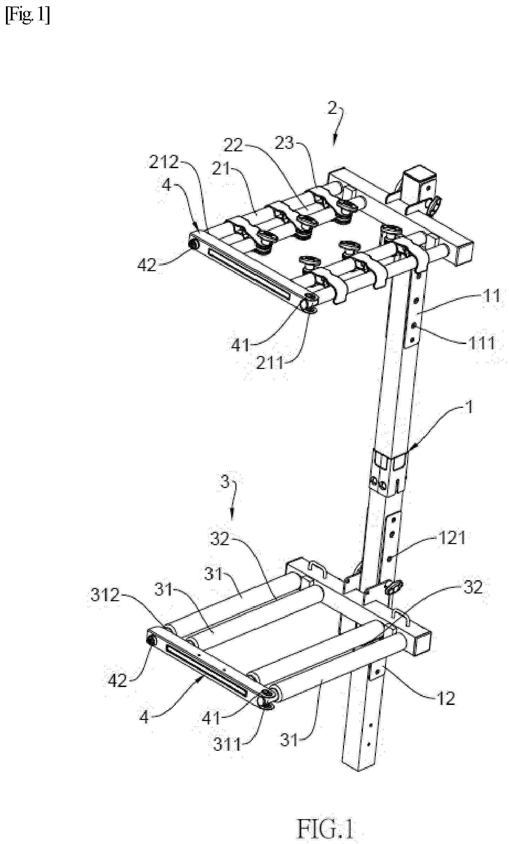

Referring to Figs. 1 to 5, the skis and snowboards rack of the present invention comprises a post 1 which is connected to rear end of a vehicle (not shown). A first clamp unit 2 is connected to the upper portion of the post 1, and a second clamp unit 3 is connected to the lower portion of the post 1. The first clamp unit 2 includes two pairs of first bars 21. A first space 22 is formed between each pair of the first bars 21. Multiple restriction members 23 are slidably mounted to each pair of the first bars 21. The restriction members 23 are slidable along the first bars 21 to adjust the distance between the restriction members 23. The first bars 21 are mounted with sleeves made of soft or resilient material.

The second clamp unit 3 includes two pairs of second bars 31. A second space 32 is formed between each pair of the second bars 31. The second spaces 32 are located corresponding to the first spaces 22. The second bars 31 are mounted with sleeves made of soft or resilient material.

The post 1 includes a first positioning section 11 and a second positioning section 12. Each of the first and second positioning section 11, 12 includes multiple holes 111/121.

Specifically, the first clamp unit 2 includes a first tube 24 and two first positioning plates 25 which are connected to the first tube 24. Each first positioning plate 25 includes first bores 251 defined through three corners thereof. The multiple pairs of first bars 21 are connected to the first tube 24. The first positioning plates 25 are pivotably connected to the first positioning section 11 of the post 1 by multiple first positioning members 5 which extend through the first bores 251 and the holes 111 so as to connect the first clamp unit 2 to the post 1. Similarly, the second clamp unit 3 includes a second tube 34 and two second positioning plates 35 which are connected to the second tube 34. Each second positioning plate 35 includes second bores 351 defined through three corners thereof. The multiple pairs of second bars 31 are connected to the second tube 34. The second positioning plates 35 are pivotably connected to the second positioning section 12 of the post 1 by multiple second positioning members 50 extending through the second bores 351 and the holes 121 so as to connect the second clamp unit 3 to the post 1.

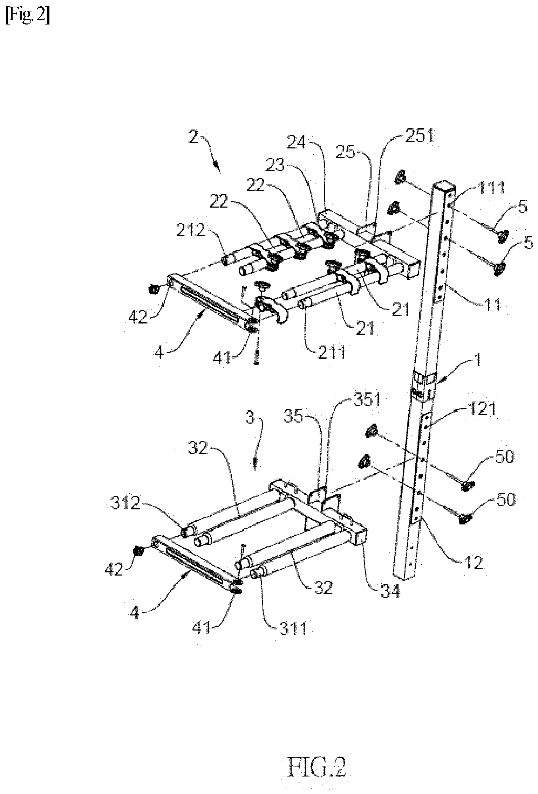

An end bar 4 is connected to each of the first clamp unit 2 and the second clamp unit 3 to close up the first spaces 22 and the second spaces 32. Specifically, one of the two first bars 21 of one pair of the first clamp unit 2 includes a first pivotal end 211, one of the two first bars 21 of another one pair of the first clamp unit 2 includes a first connection end 212 as shown in Fig. 2. The end bars 4 each have a pivotal portion 41 and an engaging portion 42, wherein the pivotal portion 41 is pivotably connected to the first pivotal end 211, and the engaging portion 42 is detachably mounted to the first connection end 212. Similarly, one of the two second bars 31 of one pair of the second clamp unit 3 includes a second pivotal end 311. One of the two second bars 31 of another one pair of the second clamp unit 3 includes a second connection end 312. The pivotal portion 41 of the end bar 4 corresponding to the second clamp unit 3 is pivotably connected to the second pivotal end 311, and the engaging portion 42 of the end bar 4 corresponding to the second clamp unit 3 is detachably mounted to the second connection end 312.

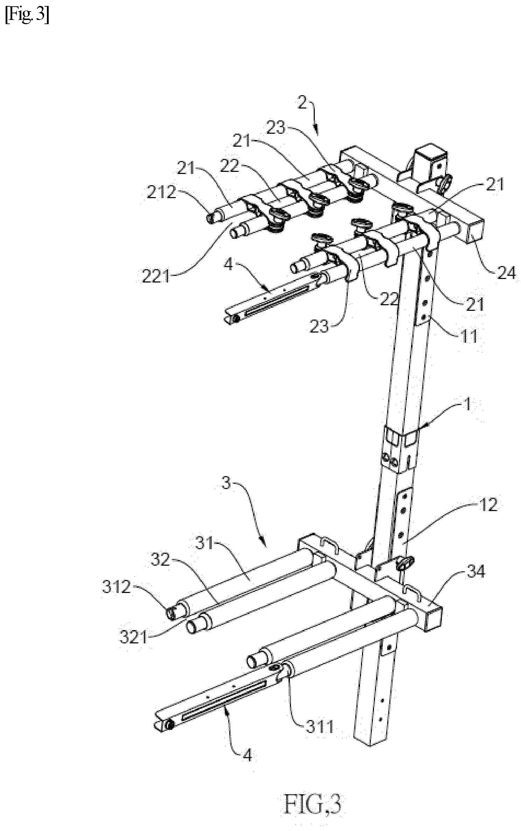

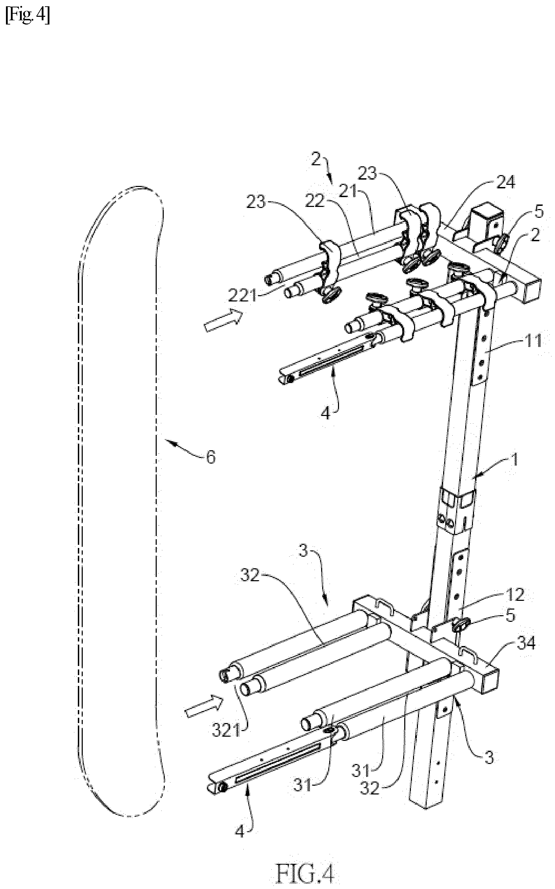

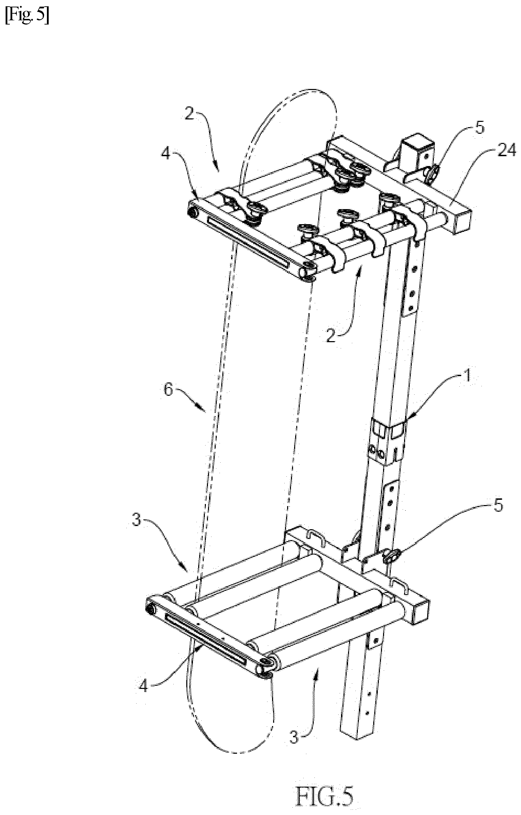

When in use, as shown in Figs. 3 and 4, each of the two respective end bars 4 is pivoted about the pivotal portion 41, and the engaging portion 42 of the end bar 4 is separated from the first/second connection ends 212/312 so as to form an entrance 221/321 as shown in Fig. 4. The restriction members 23 are released and moved to proper positions, so that the snowboard can be inserted into the first and second spaces 22, 32. The restriction members 23 contact two sides of the snowboard, and are secured to the first bar 21 as shown in Fig. 5. The end bars 4 are then pivoted to engage the engaging portions 42 with the first and second connection ends 22, 312 of the first and second bars 21, 31 to close the entrances 221, 321.

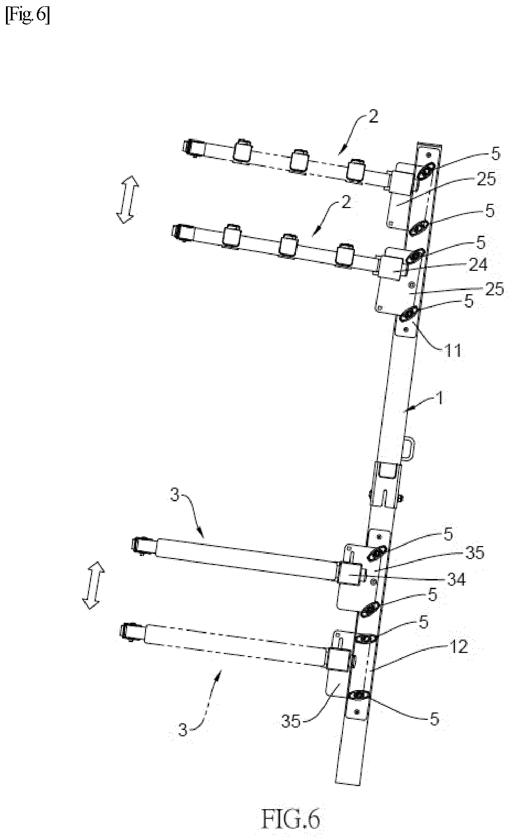

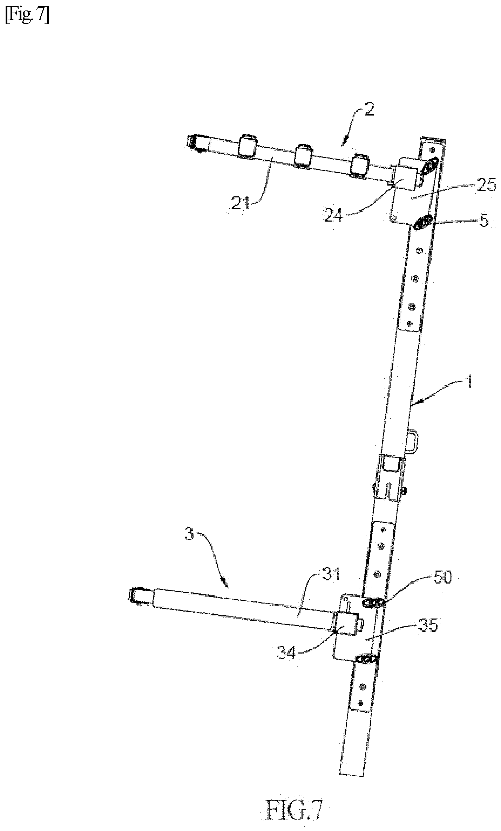

As shown in Figs. 6 and 7, the first and second clamp units 2, 3 can be moved along the first and second positioning sections 11, 12 of the post 1 by removing the first and second positioning members 5, 50 out from the first and second bores 251, 351 of the first and second positioning plates 25, 35 of the first and second clamp units 2, 3, and the holes 111, 121. By this adjustment, the first and second clamp units 2, 3 are able to position the snowboards of different lengths.

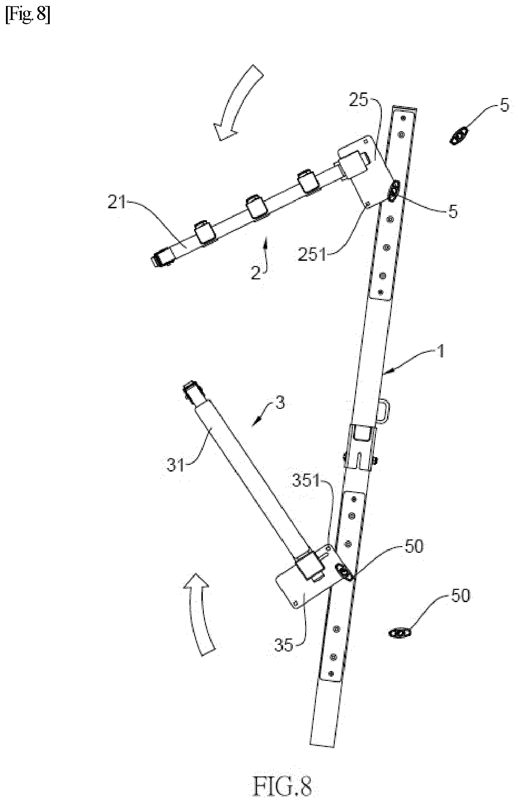

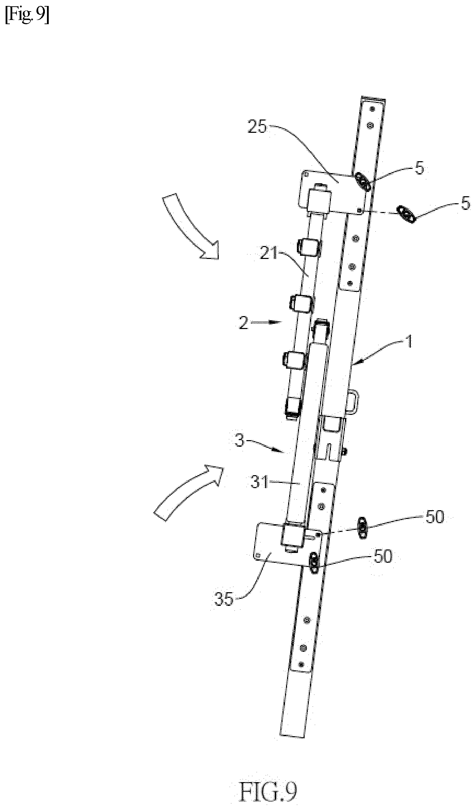

As shown in Figs. 8 and 9, when the rack is not in use, the first and second positioning members 5, 50 are removed from the first and second bores 251, 351 of one of the corners, and the first and second positioning plates 25, 35 are connected to the post 1 by only one corner. Therefore, the first and second clamp units 2, 3 are pivotable relative to the post 1 about the first and second positioning members 5, 50 at the corners of the first and second positioning plates 25, 35. The first and second clamp units 2, 3 are pivoted to be parallel to the post 1. The first and second positioning members 5, 50 are again extended through the first and second bores 251, 351 of another corners of the first and second first positioning plates 25, 35 and the holes 111, 121 to position the first and second clamp units 2, 3. The folded status of the rack saves space.

While we have shown and described the embodiment in accordance with the present invention, it should be clear to those skilled in the art that further embodiments may be made without departing from the scope of the present invention.

## Claims

1. A skis and snowboards rack comprising:
a post adapted to be connected to a vehicle, a first clamp unit and a second clamp unit respectively connected to the post;
the first clamp unit including multiple pairs of first bars, a first space formed between each pair of the first bars, multiple restriction members slidably mounted to each pair of the first bars;
the second clamp unit including multiple pairs of second bars, a second space formed between each pair of the second bars, the second spaces located corresponding to the first spaces, and
an end bar connected to each of the first clamp unit and the second clamp unit to close up the first spaces and the second spaces.

2. The skis and snowboards rack as claimed in claim 1, wherein the post includes a first positioning section and a second positioning section, each of the first and second positioning section includes multiple holes, multiple first and second positioning members extend through a portion of each of the first and second clamp units and the holes to connect the first and second clamp units to the post.

3. The skis and snowboards rack as claimed in claim 1, wherein one of the two first bars of one pair of the first clamp unit includes a first pivotal end, one of the two first bars of another one pair of the first clamp unit includes a first connection end;
one of the two second bars of one pair of the second clamp unit includes a second pivotal end, one of the two second bars of another one pair of the second clamp unit includes a second connection end;
the end bars each have a pivotal portion and an engaging portion, the pivotal portion is pivotably connected to the first/second pivotal end, the engaging portion is detachably mounted to the first/second connection end.

4. The skis and snowboards rack as claimed in claim 1, wherein the first clamp unit includes two first positioning plates, the second clamp unit includes two second positioning plates, the post is connected between the two first positioning plates and the two second positioning plates, the first and second positioning plates of the first and second clamp units) are pivotable relative to the post.

5. The skis and snowboards rack as claimed in claim 2, wherein the first clamp unit includes a first tube and two first positioning plates which are connected to the first tube, each first positioning plate includes first bores defined through at least three corners thereof, the multiple pairs of first bars are connected to the first tube, the first positioning plates are pivotably connected to the first positioning section of the post by multiple first positioning members, the first positioning plates are pivotable about one of the first positioning members at one of corners thereof.

6. The skis and snowboards rack as claimed in claim 2, wherein the second clamp unit includes a second tube and two second positioning plates which are connected to the second tube, each second positioning plate includes second bores defined through at least three corners thereof, the multiple pairs of second bars are connected to the second tube, the second positioning plates are pivotably connected to the second positioning section of the post by multiple second positioning members, the second positioning plates are pivotable about one of the second positioning member at one of corners thereof.
